# FASCICULE DE BREVET EUROPEEN

(11) **EP 2 443 464 B1**
(45) Date de publication et mention de la délivrance du brevet: **30.10.2013**
(21) Numéro de dépôt: 10725172.0
(22) Date de dépôt: 14.06.2010
(51) Int. Cl.: G01P 5/06, F16C 32/06

(54) **DISPOSITIF DE MESURE DE VITESSE DE FLUIDE EN ECOULEMENT DANS UN CONDUIT**
VORRICHTUNG ZUR MESSUNG DER GESCHWINDIGKEIT EINES FLÜSSIGKEITSSTROMS IN EINEM ROHR
DEVICE FOR MEASURING THE SPEED OF A FLUID FLOWING IN A PIPE

(30) Priorité: 15.06.2009 FR 0953983
(43) Date de publication de la demande: 25.04.2012
(73) Titulaire: Commissariat à l'Énergie Atomique et aux Énergies Alternatives, 75015 Paris (FR)
(72) Inventeur: GROS-DAILLON, Luc François, F-38320 Brie et Angonnes (FR); CUBIZOLLES, Géraud, François, F-38000 Grenoble (FR)
(74) Mandataire: Ilgart, Jean-Christophe
(86) Numéro de dépôt international: PCT/EP2010/058305
(87) Numéro de publication internationale: WO 2010/146017

(56) Documents cités:
- GB-A- 1 242 702
- GB-A- 1 262 852
- GB-A- 2 246 176

## Description

### DOMAINE TECHNIQUE

L'invention concerne un dispositif de mesure de vitesse de fluide en écoulement dans un conduit.

Les applications visées par l'invention sont toutes celles nécessitant des mesures de débit ou de vitesse d'un fluide à très basse vitesse et qui permettent notamment de qualifier des outils de dimensionnement ou d'analyse de sûreté.

Une application particulière est celle de la mesure de vitesse d'un fluide caloporteur dans un réacteur de puissance nucléaire pour toutes les conditions de fonctionnement, à la fois en fonctionnement normal (convection forcée) ou en situations accidentelles ou refroidissement passif (convection naturelle).

### ART ANTÉRIEUR

On utilise jusqu'à présent différents appareils de mesure pour mesurer les écoulements à basse vitesse.

Les différentes technologies mises en oeuvre à ce jour, parmi lesquelles celles utilisant une turbine montée sur palier (pivot saphir, roulement à billes), en général avec peu de pales sous faible inclinaison, ne permettent pas de mesurer des vitesses d'écoulement inférieures à environ 1cm/s (pour de l'eau ou équivalent de l'eau). En effet, de par leur conception et fabrication, les turbines existantes calent, c'est-à-dire ne subissent plus de rotation, dans des fluides en écoulement à des vitesses inférieures à 1cm/s.

Des exemples de paliers hydrostatiques sont par exemple décrits dans les documents GB1242702A, GB1262852A et GB2246176A. Les dispositifs divulgués dans ces documents ne permettent pas de mesurer l'écoulement d'un fluide dans un conduit.

Or, il s'est avéré nécessaire pour les inventeurs de connaître des vitesses d'écoulement inférieures à cette valeur. En effet, en l'absence d'une telle connaissance, on ne peut raisonnablement pas qualifier des outils de dimensionnement de conduit ou d'analyse dans les cas accidentels de refroidissement en convection naturelle dans des réacteurs nucléaires.

Le but de l'invention est alors de proposer une solution technologique pour mesurer des vitesses d'écoulement de fluide, tels que de l'eau liquide, inférieures au cm/s.

Un but particulier est de proposer une telle solution à moindre coût.

### EXPOSÉ DE L'INVENTION

Pour ce faire, l'invention a pour objet un dispositif de mesure de vitesse d'un fluide en écoulement dans un conduit, comprenant :
- une turbine comprenant une pluralité de pales de diamètre extérieur de l'ordre du diamètre intérieur du conduit;
- un palier de type fluide comprenant, en tant qu'élément mobile, un tube creux, borgne d'un côté et solidaire des pâles, en tant qu'élément fixe par rapport au conduit, un arbre ajusté dans le tube creux et percé intérieurement d'au moins un premier canal, dit canal d'amenée de fluide de lubrification, et au moins un deuxième canal, dit canal de drainage de fluide de lubrification, le premier et deuxième canal définissant une partie d'un circuit hydraulique.

Selon l'invention, le circuit hydraulique est adapté pour, lors de l'alimentation du(des) canal(ux) d'amenée depuis l'extérieur du conduit par un fluide de lubrification sous pression, faire circuler ce dernier à la fois entre la périphérie de l'arbre et le tube creux et entre l'extrémité de l'arbre et le fond du tube creux sous la forme d'un film d'épaisseurs correspondant aux jeux d'ajustements entre l'arbre percé et le tube creux puis est récupéré par le(s) canal(ux) de drainage, le film de fluide de lubrification ainsi créé et l'état de surface des parois ajustées du tube creux et de l'arbre étant tels que les frottements générés entre ceux-ci sont minimes jusqu'à permettre une rotation des pales de la turbine, et donc une mesure de leur vitesse lors d'un écoulement du fluide dans le conduit à des vitesses inférieures au cm/s.

De préférence, le jeu axial d'ajustement entre l'arbre percé et le tube creux est inférieur à 50 µm, typiquement de l'ordre de 22 µm.

De préférence encore, le jeu radial d'ajustement, dit jeu au rayon, entre l'arbre percé et le tube creux est inférieur à 50 µm, typiquement de l'ordre de 32 µm.

Avantageusement, l'état de surface des parois ajustées du tube creux et de l'arbre est inférieur à 0,1 µm.

Selon un mode de réalisation avantageux, le circuit hydraulique comprend :
- un canal d'amenée du fluide de lubrification percé intérieurement le long de l'arbre en y étant centré,
- une chambre hydraulique axiale de débit sur laquelle débouche le canal d'amenée via une résistance hydraulique calibrée et débouchant à l'extrémité de l'arbre en regard du fond du tube borgne,
- deux étages de chambres hydrauliques radiales de débit sur chacune desquelles débouche le canal d'amenée via une résistance hydraulique calibrée et débouchant radialement à la circonférence de l'arbre, chaque étage de débit étant réalisé à une côte axiale différente de l'autre étage de débit et comprenant au moins trois chambres identiques réparties uniformément à la circonférence de l'arbre,
- trois canaux de drainage du fluide de lubrification percés chacun intérieurement à l'arbre en étant répartis parallèlement autour du canal d'amenée de fluide de lubrification,
- trois étages de drainage débouchant chacun à la fois sur toute la périphérie de l'arbre et sur un des canaux de drainage du fluide de lubrification; un des étages de drainage étant réalisé à une côte comprise entre les deux côtes des étages de débit, un autre des étages de drainage étant réalisé à une côte comprise entre la côte l'étage de débit radial le plus proche de la chambre de débit axiale et la côte de cette dernière, et le troisième des étages étant réalisé à l'extrémité de l'arbre opposée à celle en regard du fond du tube creux. Les résistances hydrauliques calibrées ont toutes la même valeur.

Les inventeurs ont pensé à combiner judicieusement les fonctions existantes d'une butée fluide, usuellement dénommée butée hydrostatique, de type monodirectionnelle et d'un palier fluide actif, usuellement dénommé palier hydrostatique, mais sans avoir à implanter deux paliers fluides à distance l'un de l'autre comme usuellement afin de maintenir la charge dans l'axe du palier en cas de valeur du moment radial conséquente.

En effet, les inventeurs connaissaient la fonction d'une butée fluide (butée hydrostatique), monodirectionnelle à savoir maintenir une charge dans une position axiale selon un seul sens axial (vers le haut) quelles que soient les perturbations subies par la butée. Ils connaissaient d'autre part la fonction d'un palier fluide actif (palier hydrostatique) qui est de maintenir la charge dans l'axe du palier. Mais, jusqu'à présent, quelle que soit l'application visée, lorsque l'on souhaitait obtenir un couple de rattrapage du moment radial suffisant, cela nécessitait l'utilisation impérative de deux paliers distants l'un de l'autre d'une distance minimale.

Les inventeurs ont alors conçu judicieusement une seule pièce (arbre creux) percée intérieurement en y intégrant l'ensemble des fonctions (butée fluide active monodirectionnelle; palier fluide actif; couple de rattrapage d'un moment radial).

En d'autres termes, la chambre axiale ainsi définie dans l'arbre creux réalise la fonction butée fluide actif monodirectionnelle (butée hydrostatique), tandis que les étages de chambres radiales jouent le rôle de paliers fluide actifs (paliers hydrostatiques), la côte entre deux étages consécutifs étant suffisante pour obtenir le couple de rattrapage de moment radial souhaité.

Selon une variante de réalisation, les pales de la turbine sont fixées sur un moyeu à l'intérieur duquel est emmanché et fixé le tube creux dans lequel l'arbre percé est ajusté.

Selon une autre variante de réalisation, les pales de la turbine sont fixées sur un moyeu qui constitue le tube creux dans lequel l'arbre percé est ajusté.

Pour implanter le dispositif dans un conduit, on fixe de préférence l'arbre creux à un supportage, dont au moins une partie est percée d'une canalisation connectée au canal d'amenée de fluide de lubrification pour amener radialement ledit fluide dans l'arbre et au moins une partie est percée d'une canalisation connectée au canal de drainage du fluide de lubrification pour évacuer radialement ledit fluide ayant lubrifié le palier.

Pour réaliser un maintien axial de la turbine à l'opposée de la butée, le dispositif selon l'invention peut comprendre un clip d'arrêt axial de l'arbre inséré dans une gorge pratiquée dans le tube creux de sorte à servir de butée avec un épaulement de l'arbre.

Un débit de l'ordre de 7 cc/s sous une pression de 0.5 bars dans le circuit hydraulique est avantageux.

L'invention concerne également l'utilisation du dispositif de mesure décrit précédemment dans un conduit à écoulement sensiblement vertical ou à faible inclinaison par rapport à la verticale, typiquement selon un angle de moins de 30° par rapport à la verticale.

### BRÈVE DESCRIPTION DES DESSINS

D'autres avantages et caractéristiques ressortiront mieux à la lecture de la description détaillée de l'invention faite à titre d'exemple illustratif et non limitatif en référence aux figures suivantes parmi lesquelles :
- la figure 1 est une vue en perspective en coupe partielle d'un dispositif de mesure selon un mode de réalisation de l'invention tel qu'agencé dans un conduit,
- la figure 2 est une vue éclatée et en coupe longitudinale selon l'axe XX' du dispositif,
- la figure 2A est une vue en coupe transversale du dispositif assemblé,
- la figure 2B est une vue de détail montrant une chambre hydraulique selon l'invention,
- la figure 2C est une vue en perspective en coupe partielle d'un arbre du palier fluide selon l'invention.

### EXPOSÉ DÉTAILLÉ DE MODES DE RÉALISATION PARTICULIERS

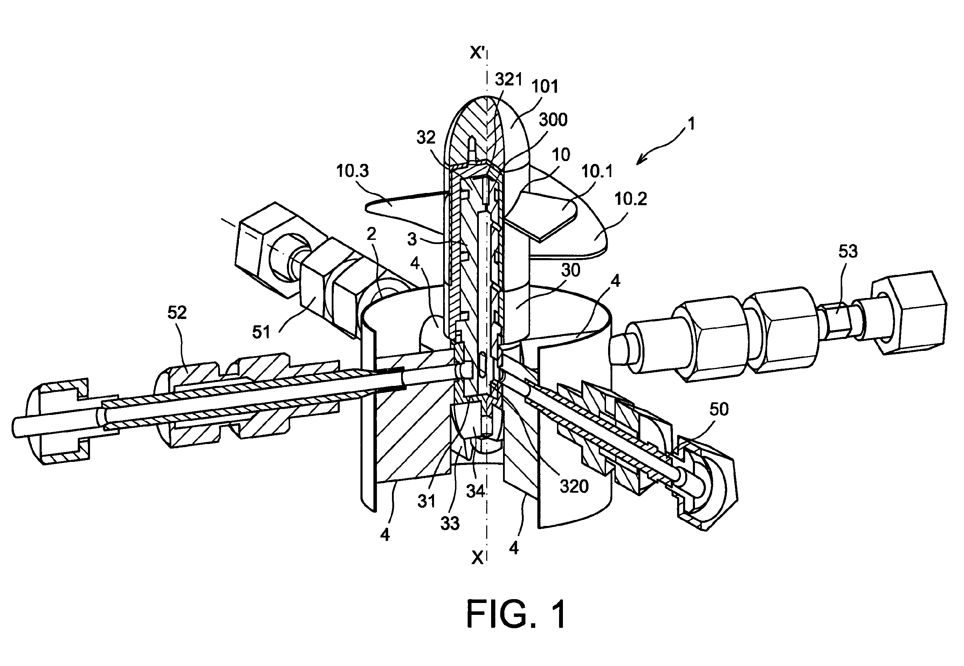

En figure 1, on a représenté un dispositif 1 de mesure selon l'invention à implanter dans un conduit. On précise ici que l'implantation est montrée selon l'orientation réelle du fluide à mesurer : écoulement sensiblement vertical ou à faible inclinaison par rapport à la verticale, typiquement selon un angle de moins de 30° par rapport à la verticale.

Le dispositif de mesure 1 selon l'invention peut aussi bien mesurer des vitesses de fluide à écoulement vertical du haut vers le bas qu'inversement.

Dans la suite de la description, les termes « supérieur » et « inférieur » sont utilisés par référence à l'implantation selon la figure 1 : ainsi, l'ogive supérieure 102 est l'ogive de la turbine située au dessus, l'ogive inférieure est l'ogive du dispositif située en dessous.

Le dispositif 1 comprend tout d'abord une turbine 10 constituée de trois pales 10.1, 10.2, 10.3 identiques entre elles et de diamètre extérieur de l'ordre du diamètre intérieur d'un conduit à explorer. Ces pales 10.1, 10.2 et 10.3 sont fixées sur un moyeu 100. A l'extrémité supérieure du moyeu 100 est fixée une ogive supérieure 101.

Le dispositif 1 comprend également un palier de type fluide 3. Ce palier 3 comprenant, en tant qu'élément mobile, un tube creux 30, borgne d'un côté et solidaire du moyeu 100.

L'élément fixe 31 du palier 3 par rapport au conduit, comprend un arbre 32 ajusté dans le tube creux 30. L'arbre 32 comprend une réduction 32A. Bien que non montré, il est prévu un clip d'arrêt axial de l'arbre 32, ce clip est inséré dans une gorge pratiquée dans le tube creux 30 afin de servir de butée avec un épaulement de l'arbre. Cela permet de réaliser un maintien axial de la turbine à l'opposée de la butée hydrostatique détaillée par la suite.

L'élément fixe du palier comprend également une douille 33 qui sert de pièce de fixation à un ensemble de quatre raidisseurs radiaux 4 eux-mêmes fixés à une couronne 2. Le supportage du dispositif de mesure 1 selon l'invention est donc constitué de la couronne 2 avec les quatre raidisseurs radiaux 4. La douille 33 est prolongée d'une ogive inférieure 34. Les quatre raidisseurs 4 identiques entre eux présentent une forme extérieure profilée pour ne pas perturber l'écoulement du fluide dans le conduit 2 lorsque celui-ci est à grande vitesse (jusqu'à une valeur de 3 à 4m/s). Les raidisseurs comprennent des canalisations de fluide pour l'alimentation 50, 51, et le drainage 52, 53 du palier comme détaillé ci-après.

L'arbre 32 est percé intérieurement de plusieurs canaux constituant une partie d'un circuit hydraulique que l'on cherche à réaliser selon l'invention.

Ainsi, le circuit comprend tout d'abord un canal 320 d'amenée du fluide de lubrification percé intérieurement le long de l'arbre 32 en y étant centré. Tel qu'illustré en figure 1, le fluide de lubrification doit être amené en fonctionnement depuis l'extérieur radialement par les deux canalisations d'alimentation 50, 51 diamétralement opposées en traversant deux des raidisseurs 4 et en débouchant dans le canal d'amenée 320 par l'intermédiaire des fenêtres d'amenée 3200.

L'arbre 32 comprend également une chambre hydraulique axiale de débit 321 sur laquelle débouche le canal d'amenée 320 via une résistance hydraulique calibrée 3200. Cette chambre hydraulique axiale 321 débouche à l'extrémité de l'arbre en regard du fond 300 du tube 30.

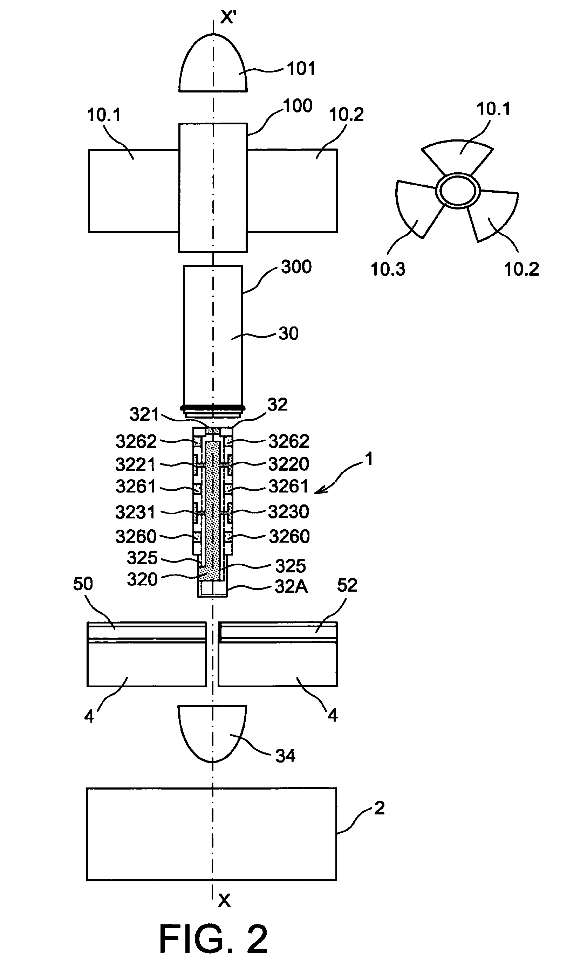

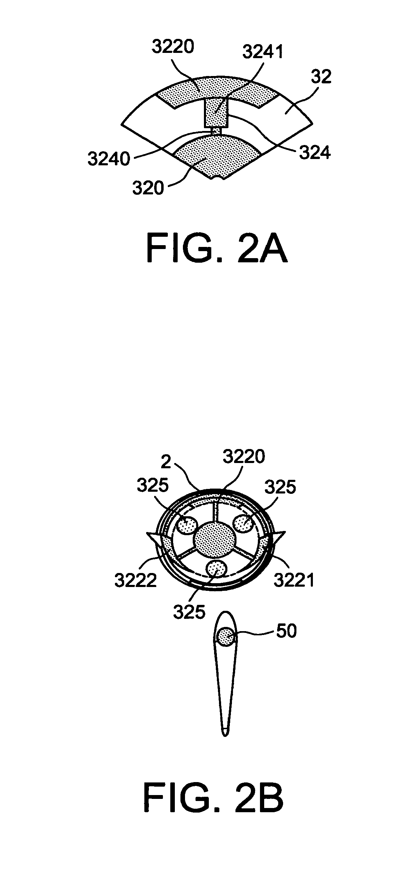

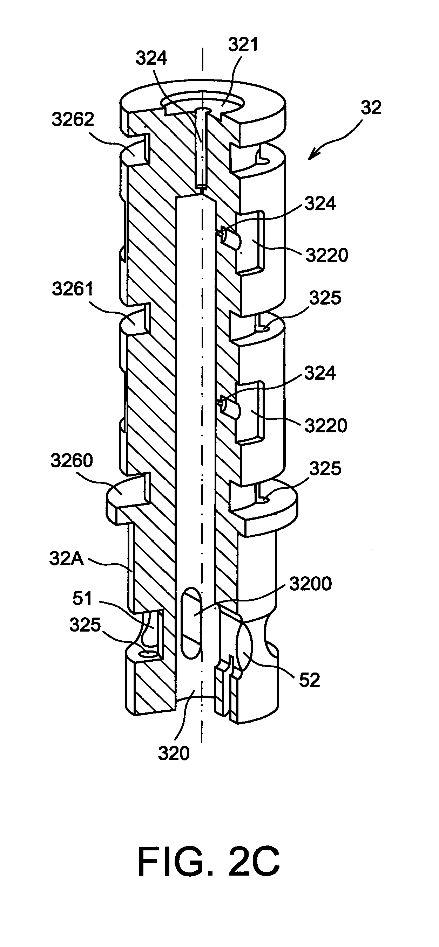

Le circuit comprend en outre deux étages 322, 323 de chambres hydrauliques radiales de débit sur chacune desquelles débouche le canal d'amenée 320 via une résistance hydraulique calibrée 324 et débouchant radialement à la circonférence de l'arbre 32 (figure 2). Chaque étage de débit 322, 323 est réalisé à une côte axiale différente de l'autre étage. Dans le mode de réalisation illustré, chaque étage 322 ou 323 au moins trois chambres identiques réparties uniformément à la circonférence du arbre. Ainsi, en figure 2 A, l'étage 322 comprend exactement trois chambres identiques 3220, 3221 et 3222 réparties à 120° l'une de l'autre.

Le circuit comprend trois canaux 325 de drainage du fluide de lubrification percés chacun intérieurement à l'arbre 32, en étant répartis parallèlement autour du canal d'amenée de fluide de lubrification 320.

Le circuit comprend enfin trois étages de drainage 326 débouchant chacun à la fois sur toute la périphérie de l'arbre 32 et sur un des canaux de drainage 325 du fluide de lubrification.

Un des étages de drainage 3261 est réalisé à une côte comprise entre les deux côtes des étages de débit 322, 323. Un autre des étages de drainage 3262 est réalisé à une côte comprise entre la côte l'étage 322, 3221, 3222 de débit radial le plus proche de la chambre de débit axiale 321 et la côte de cette dernière. Le troisième des étages 3260 enfin est réalisé à l'extrémité de l'arbre 32 opposée à celle en regard du fond 300 du tube creux 30.

Dans le dispositif de mesure selon l'invention, les résistances hydrauliques calibrées 324 ont toutes la même valeur.

Le fluide drainé dans les canaux 3260, 3261 et 3262 est évacué du dispositif 1 radialement par les canalisations 51 et 53 percées dans les deux autres raidisseurs 4.

Ainsi, le palier fluide 30, 32 selon l'invention réalise les fonctions à la fois d'un palier fluide actif (ou palier hydrostatique) et d'une butée monodirectionnelle (ou butée hydrostatique) avec deux étages 322, 323 de trois chambres de palier avec une chambre de butée en bout 321, soit sept chambres alimentées au travers de sept résistances hydrauliques de contrôle 234, les étages des chambres 322, 323 étant séparés par des drains 3260, 3261, 3262. Dans ce palier fluide, le poids de l'équipage mobile constitué par la turbine 10 comprenant le moyeu 100 avec les trois pales 10.1, 10.2 et 10.3 solidaires et le tube creux 30 solidaire du moyeu 100, sert de contre butée à l'arbre 32.

En fonctionnement, c'est-à-dire lorsqu'un fluide s'écoule dans un conduit dans lequel le dispositif de mesure selon l'invention est implanté, le circuit hydraulique réalisé est alimenté par son canal d'amenée 320 depuis les canalisations 50, 51, c'est-à-dire depuis l'extérieur, par un fluide de lubrification sous pression.

Ce fluide de lubrification circule alors à la fois entre la périphérie de l'arbre 32 et le tube creux 30 et entre l'extrémité de l'arbre 321 et le fond du tube creux 300 sous la forme d'un film d'épaisseurs correspondant aux jeux d'ajustements entre l'arbre percé 32 et le tube creux 30. Il est récupéré ensuite par les canaux de drainage 3260, 3261, 3262.

Selon l'invention, le film de fluide de lubrification ainsi créé et l'état de surface des parois ajustées du tube creux 30 et de l'arbre 32 sont tels que les frottements générés entre ceux-ci sont minimes jusqu'à permettre une rotation des pales 10.1, 10.2, 10.3 de la turbine 10, et donc une mesure de leur vitesse lors d'un écoulement du fluide dans le conduit à des vitesses inférieures au cm/s.

Pour finaliser la mesure recherchée, on agence des moyens de détection dans la paroi du conduit dans lequel le fluide s'écoule et en regard de la circonférence balayée par les pâles de la turbine 10.1, 10.2, 10.3. Ces moyens de détection peuvent avantageusement être des détecteurs dits de proximité qui mesurent le « top » entre chaque passage de pâles.

A titre d'exemple, on a réalisé un dispositif de mesure 1 avec les dimensions, tolérances de fabrications et états de surface suivantes.

**DIMENSIONS PALIER 3 ET TUBE CREUX 30 :**

### - Palier 3

Arbre 32
   Diamètre : 20.00 mm
   Longueur : 50.40 mm
Réduction 32A d'arbre 32
   Diamètre : 18.0 mm
   Longueur : 15.0 mm
Canal d'amenée 320
   Diamètre : 7.0 mm centré sur l'axe XX'

Chambre axiale ou butée 321
   Profondeur : 1.0 mm
   Diamètre : 10.0 mm
Etages de chambres radiales 322, 323
   Longueur : angle d'un 1/8^{ème} de circonférence soit en développé 7.85 mm
   Hauteur : 7.80 mm
   Distance entre un étage de chambre 322, 323 et un étage de drainage 326 : 5.20 mm
   Côte respective entre le milieu de l'étage de chambres radiales 322 et 323 et l'extrémité en bout de chambre 321 :14.10 mm et 36.30 mm
Résistance hydraulique de contrôle 324
   Diamètre de la partie 3240 : 480 µm +/- 10 µm
   Longueur de la partie 3240 :1 mm
   Diamètre de la partie 3241 : 2.0 mm

Etages de drainage circonférentiels 326
   Profondeur : 3.0 mm
   Hauteur : 4.0 mm
   Côtes respectives entre le milieu de chaque étage de drainage 326 et l'extrémité en bout de chambre 321 : 3.00mm, 25.20mm et 47.40 mm
Canaux de drainage 325
   Trois conduits décentrés par rapport à XX'
   Diamètre individuel : 4.0 mm

### - Tube creux 30 formant cloche :

Diamètre interne : 20.0 mm
Diamètre externe : 22.0 mm
Longueur : 50.0 mm

### TOLERANCES ET ETAT DE SURFACES ENTRE PALIER 3 ET TUBE CREUX 30

A l'équilibre, le jeu axial entre tube creux 30 et arbre 32 est de 22 µm et le jeu au rayon est de 32 µm et l'ensemble doit être usiné pour un jeu au rayon de 32 +/- 2 µm.

Le fond 300 de la cloche 30 et le bout d'arbre 32 doivent rester parallèles à mieux que 2 µm.

L'état de surface des deux cylindres 30 et 32 doit être inférieur à 0.1 µm. Ainsi, tous les angles seront cassés pour éliminer les bavures et les pièces seront nettoyées pour éliminer toutes impureté d'une taille supérieure à 0.1 µm.

### DIMENSIONS, TOLERANCES ET ETAT DE SURFACES SUR TURBINE 10, SUPPORTAGE 2,4 ET OGIVES 101, 34

### - Turbine 10

Moyeu 100 de turbine
Diamètres : 22*24 mm qui donnent un montage serré sur la cloche 30
Hauteur : 40 mm
Pales 10.1, 10.2, 10.3
Nombre: 3
Diamètre : 87.3 mm
Pas : 100.0 mm
Angle optique : 30°
Epaisseur : 1.0 mm
Tolérances : en dehors du serrage sur la cloche 30, les tolérances sont de 0.1 mm.
Etat de surface : 0.1 µm

### - Supportage

Couronne 2
Diamètres : 87.3*89.3mm
Hauteur : 45.0 mm
Raidisseurs profilés 4
Nombre : 4
Epaisseur maximale : 7.0 mm
Hauteur : 45.0 mm
Canalisations d'alimentation de fluide 50, 52 Diamètre : 5.0 mm
Tolérances générales du supportage : 0.1 mm,
Etat de surface : 0.1 µm

### - Ogives 101 et 34 :

Elles sont en forme de demi ellipses avec Rx/Ry de l'ordre de 1.5, adaptées aux diamètres de la cloche 30 et du moyeu 100 de turbine 10
Tolérances : +/- 0.1 mm,
Etat de surface 0.1 µm.

Le dispositif selon l'exemple de réalisation ci-dessus peut être alimenté par un débit de fluide, par exemple de l'eau, de l'ordre de 7 cc/s sous une pression de 0.5 bars.

Le dispositif de mesure qui vient d'être décrit est relativement simple à usiner et donc présente un coût acceptable pour la fonction de mesure à très basses vitesses d'écoulement recherchées dans le cadre de l'invention (inférieures au cm/s).

Ainsi, on peut atteindre la connaissance de vitesses de fluide jusqu'ici considérées comme nulles : on peut ainsi qualifier des outils de dimensionnement et utiliser un dispositif de mesure selon l'invention dans des expériences de sûreté des réacteurs nucléaires par exemple dans des expériences reproduisant les cas accidentels de refroidissement en convection naturelle.

Un exemple particulièrement intéressant est le cas d'un comportement d'un coeur de réacteur dit « en thermosiphon », c'est-à-dire dans lequel l'écoulement est en convection naturelle.

En outre, on peut également utiliser le même dispositif pour mesurer des vitesses d'écoulement de fluide relativement élevées, de l'ordre de quelques m/s : le dispositif de mesure convient ainsi à une large gamme de vitesses d'un fluide en écoulement dans un conduit sans qu'il y ait lieu d'en changer. En d'autres termes, on peut utiliser le même dispositif pour un fluide qui s'écoule avec de très faibles vitesses inférieures au cm/s et pour ce même fluide dont la vitesse est susceptible d'augmenter jusqu'à quelques m/s.

Enfin, il est possible d'utiliser le fluide dont on cherche à mesurer la vitesse en écoulement en tant que fluide de lubrification : il suffit pour cela de créer une dérivation du circuit de fluide en écoulement afin de réaliser le circuit de lubrification.

## Revendications

1. Dispositif (1) de mesure de vitesse d'un fluide en écoulement dans un conduit, comprenant :
- une turbine (10) comprenant une pluralité de pales (10.1, 10.2, 10.3) de diamètre extérieur de l'ordre du diamètre intérieur du conduit, **caractérisé en ce qu'**il comprend:
- un palier (3) fluide comprenant, en tant qu'élément mobile, un tube creux (30), borgne d'un côté et solidaire des pâles (10.1, 10.2, 10.3), en tant qu'élément fixe par rapport au conduit, un arbre (32) ajusté dans le tube creux et percé d'au moins un premier canal (320), dit canal d'amenée de fluide de lubrification, et au moins un deuxième canal (325), dit canal de drainage de fluide de lubrification,
- l'arbre (32) comprenant une chambre hydraulique axiale de débit (321) sur laquelle débouche le premier canal (320), et la chambre hydraulique axiale de débit (321) débouchant à l'extrémité de l'arbre (32) en regard d'un fond (300) du tube creux (30),
- l'arbre (32) comprenant des étages (322, 323) de chambres hydrauliques radiales de débit sur chacune desquelles débouche le canal d'amenée (320), et les étages de chambres hydrauliques radiales de débit débouchant radialement à la circonférence de l'arbre (32),
- le premier (320) et deuxième canal (325) définissant une partie d'un circuit hydraulique, dans lequel le circuit hydraulique est adapté pour, lors de l'alimentation du(des) canal(ux) d'amenée(320) depuis l'extérieur du conduit par un fluide de lubrification sous pression, faire circuler ce dernier à la fois entre la périphérie de l'arbre (32) et le tube creux (30) et entre l'extrémité de l'arbre (321) et le fond (300) du tube creux (30) sous la forme d'un film d'épaisseurs correspondant aux jeux d'ajustements entre l'arbre percé et le tube creux puis est récupéré par le(s) canal(ux) de drainage (325).

2. Dispositif selon la revendication 1, dans lequel le jeu axial d'ajustement entre l'arbre percé (32, 320) et le tube creux (30) est inférieur à 50 µm, typiquement de l'ordre de 22 µm.

3. Dispositif selon la revendication 1 ou 2, dans lequel le jeu radial d'ajustement, dit jeu au rayon, entre l'arbre percé (32, 320) et le tube creux (30) est inférieur à 50 µm, typiquement de l'ordre de 32 µm.

4. Dispositif selon l'une des revendications précédentes, dans lequel l'état de surface des parois ajustées du tube creux et de l'arbre est inférieur à 0,1 µm.

5. Dispositif selon l'une des revendications précédentes, dans lequel le circuit hydraulique comprend :
le canal (320) d'amenée du fluide de lubrification est percé intérieurement le long de l'arbre (32) en y étant centré,
et dans lequel le canal d'amenée débouche via une résistance hydraulique calibrée (324) dans la chambre hydraulique, ledit dispositif comportant :
• deux étages (322, 323) de chambres hydrauliques radiales de débit sur chacune desquelles débouche le canal d'amenée (320) via une résistance hydraulique calibrée (324) et débouchant radialement à la circonférence de l'arbre, chaque étage de débit étant réalisé à une côte axiale différente de l'autre étage de débit et comprenant au moins trois chambres identiques (3220, 3221, 3222) réparties uniformément à la circonférence de l'arbre,
• trois canaux (325) de drainage du fluide de lubrification percés chacun intérieurement à l'arbre, en étant répartis parallèlement autour du canal d'amenée de fluide de lubrification (320),
• trois étages de drainage (3260, 3261, 3262) débouchant chacun à la fois sur toute la périphérie de l'arbre et sur un des canaux de drainage (325) du fluide de lubrification; un des étages de drainage (3261) étant réalisé à une côte comprise entre les deux côtes des étages de débit (322, 323), un autre des étages de drainage (3262) étant réalisé à une côte comprise entre la côte de l'étage (322) de débit radial le plus proche de la chambre de débit axiale (321) et la côte de cette dernière, et le troisième des étages (3260) étant réalisé à l'extrémité de l'arbre (32) opposée à celle en regard du fond du tube creux, dans lequel les résistances hydrauliques calibrées (324) ont toutes la même valeur.

6. Dispositif selon l'une des revendications précédentes, dans lequel les pales (10.1, 10.2, 10.3) de la turbine (10) sont fixées sur un moyeu (100) à l'intérieur duquel est emmanché et fixé le tube creux (30) dans lequel l'arbre percé (32) est ajusté.

7. Dispositif selon l'une quelconque des revendications 1 à 5, dans lequel les pales de la turbine sont fixées sur un moyeu qui constitue le tube creux dans lequel l'arbre percé est ajusté.

8. Dispositif selon l'une des revendications précédentes, dans lequel l'arbre (32) est fixé à un supportage (2, 4), dont au moins une partie (4) est percée d'une canalisation (50, 52) connectée au canal d'amenée (320) de fluide de lubrification pour amener radialement ledit fluide dans l'arbre et au moins une partie (4) est percée d'une canalisation (51, 53) connectée au canal de drainage (325) du fluide de lubrification pour évacuer radialement ledit fluide ayant lubrifié le palier.

9. Dispositif selon l'une des revendications précédentes, comprenant un clip d'arrêt axial de l'arbre inséré dans une gorge pratiquée dans le tube creux afin de servir de butée avec un épaulement de l'arbre.

10. Dispositif selon l'une des revendications précédentes, dans lequel le circuit hydraulique est adapté pour recevoir un débit de l'ordre de 7cc/s sous une pression de 0.5bars.

11. Utilisation du dispositif de mesure selon l'une des revendications précédentes dans un conduit à écoulement sensiblement vertical ou à faible inclinaison par rapport à la verticale, typiquement selon un angle de moins de 30° par rapport à la verticale.

## Patentansprüche

1. Vorrichtung (1) zur Messung der Geschwindigkeit eines in einer Leitung strömenden Fluids, umfassend :
- eine Turbine (10), eine Vielzahl Drehflügel (10.1, 10.2, 10.3) mit einem Außendurchmesser in der Größenordnung des Innendurchmessers der Leitung umfassend, **dadurch gekennzeichnet, dass** sie umfasst:
- ein Fluidlager (3), umfassend, als bewegliches Element, ein hohles Rohr (30), auf einer Seite verschlossen und fest verbunden - bzw. aus einem Stück - mit den Drehflügeln (10.1, 10.2, 10.3), als festes Element in Bezug auf die Leitung, eine Welle (32), eingepasst in das hohle Rohr und durchbohrt von wenigstens einem ersten Kanal (320), Schmierfluid-Zuflusskanal genannt, und wenigstens einem zweiten Kanal (325), Schmierfluid-Abflusskanal genannt,
- die Welle (32) mit einer axialen hydraulischen Durchflusskammer (321), in die der erste Kanal (320) mündet, und die am Ende der Welle (32) gegenüber einem hintersten Teil (300) des hohlen Rohrs (30) mündende axiale hydraulische Durchflusskammer (321),
- die Welle (32), Stufen (322, 323) von radialen hydraulischen Durchflusskammern umfassend, in jede von denen der Zuflusskanal (320) mündet, wobei die Stufen radialer hydraulischer Durchflusskammern radial am Umfang der Welle (32) münden,
- den ersten (320) und zweiten (325) Kanal, die einen Teil eines hydraulischen Kreislaufs definieren, in dem der hydraulische Kreislauf so angepasst ist, dass bei einer Versorgung des (der) Zuflusskanals (Zuflusskanäle) (320) von außerhalb der Leitung mit einem druckbeaufschlagten Schmierfluid dieses letztere zugleich zwischen der Peripherie der Welle (32) und dem hohlen Rohr (30) und zwischen dem Ende der Welle (321) und dem hintersten Teil (300) des hohlen Rohrs (30) in Form eines Films mit einer Dicke fließt, die den Anpassungsspielen zwischen der hohlgebohrten Welle und dem hohlen Rohr entspricht, und dann durch den (die) Abflusskanal (Abflusskanäle) (325) zurückgewonnen wird.

2. Vorrichtung nach Anspruch 1, bei der das axiale Anpassungsspiel zwischen der hohlgebohrten Welle (32, 320) und dem hohlen Rohr (30) kleiner als 50 µm und typischerweise in der Größenordnung von 22 µm ist.

3. Vorrichtung nach Anspruch 1 oder 2, bei der das radiale Anpassungsspiel, Radiusspiel genannt, zwischen der hohlgebohrten Welle (32, 320) und dem hohlen Rohr (30) kleiner als 50 µm und typischerweise in der Größenordnung von 32 µm ist.

4. Vorrichtung nach einem der vorhergehenden Ansprüche, bei der der Oberflächenbeschaffenheit der angepassten Wände des hohlen Rohrs und der Welle kleiner als 0,1 µm ist.

5. Vorrichtung nach einem der vorhergehenden Ansprüche, bei der der hydraulische Kreislauf umfasst :
den in Längsrichtung der Welle (32) zentriert gebohrten Schmierfluid - Zuflusskanal (320), der via eines kalibrierten hydraulischen Widerstands (324) in die Hydraulikkammer mündet, wobei die genannte Vorrichtung umfasst:
• zwei Stufen (322, 323) von radialen Durchflusskammern, in jeder von denen der Zuflusskanal (320) mündet, via einen kalibrierten hydraulischen Widerstand (324), und die radial am Umfang der Welle münden, wobei jede Durchflussstufe auf einer anderen axialen Höhe als die andere Durchflussstufe realisiert ist und wenigstens drei gleichmäßig über den Umfang verteilte identische Kammern (3220, 3221, 3222) umfasst,
• drei in die Welle gebohrte, parallel um den Schmierfluid-Zuflusskanal (320) herum verteilte Schmierfluid-Abflusskanäle (325),
• drei Abflussstufen (3260, 3261, 3262), jede zugleich am gesamten Umfang der Welle und in einen der Abflusskanäle (325) des Schmierfluids mündend, wobei eine der Abflussstufen (3261) auf einer Höhe realisiert ist, die enthalten ist zwischen den beiden Höhen der Durchflussstufen (322, 323), eine andere der Abflussstufen (3262) auf einer Höhe realisiert ist, die enthalten ist zwischen der Höhe der radialen Durchflussstufe (322), die der axialen Durchflusskammer (321) und der Höhe dieser letzteren am nächsten ist, und die dritte der Stufen (3260) an einem Ende der Welle (32) realisiert ist, das demjenigen entgegengesetzt ist, das dem hintersten Teil des hohlen Rohrs gegenübersteht, wobei alle kalibrierten hydraulischen Widerstände (324) den gleichen Wert haben.

6. Vorrichtung nach einem der vorhergehenden Ansprüche, bei der die Drehflügel (10.1, 10.2, 10.3) der Turbine (10) auf einer Nabe (100) befestigt sind, in deren Innern das hohle Rohr (30) eingepresst und befestigt ist, in das die hohlgebohrte Welle (32) eingepasst ist.

7. Vorrichtung nach einem der Ansprüche 1 bis 5, bei der die Drehflügel der Turbine auf einer Nabe befestigt sind, die das hohle Rohr bildet, in das die hohlgebohrte Welle eingepasst ist.

8. Vorrichtung nach einem der vorhergehenden Ansprüche, bei der die Welle (32) an bzw. in einer Einrichtung (2, 4) festgemacht ist, von der wenigstens ein Teil (4) von einer Leitung (50, 52) durchbohrt ist, die mit dem Schmierfluid-Zuflusskanal (320) verbunden ist, um das genannte Fluid der Welle radial zuzuleiten, und wenigstens ein Teil (4) von einer Leitung (51, 53) durchbohrt ist, die mit dem Abflusskanal (325) des Schmierfluids verbunden ist, um das der Schmierung des Lagers dienende Fluid radial abzuleiten.

9. Vorrichtung nach einem der vorhergehenden Ansprüche, einen Clip zur axialen Arretierung der Welle umfassend, eingefügt in eine in dem hohlen Rohr vorgesehene Nut, um einer Schulter der Welle als Anschlag zu dienen.

10. Vorrichtung nach einem der vorhergehenden Ansprüche, bei der der hydraulische Kreislauf angepasst ist an eine Durchflussmenge in der Größenordnung von 7 cm³/s unter einem Druck von 0,5 bar.

11. Anwendung der Messvorrichtung nach einem der vorhergehenden Ansprüche in einer Leitung mit im Wesentlichen vertikaler oder in Bezug auf die Vertikale schwach geneigter Strömung, typischerweise gemäß einem Winkel von weniger als 30° in Bezug auf die Vertikale.

## Claims

1. A device (1) for measuring the speed of a fluid flowing in a pipe, including:
- a turbine (10) including multiple blades (10.1, 10.2, 10.3) of external diameter of the order of the internal diameter of the pipe, **characterised in that**:
- a fluid bearing (3), including, as a moving element, a hollow tube (30), which is blind on one side and coupled with the blades (10.1, 10.2, 10.3), as an element which is attached relative to the pipe, a shaft (32) adjusted in the hollow tube and perforated by at least a first channel (320), called the lubrication fluid inlet channel, and at least a second channel (325), called the lubrication fluid drainage channel, said shaft (32) comprising a axial hydraulic flow chamber (321 ) in which the first channel (320) emerges, and the axial hydraulic flow chamber (321) emerging at the end of the shaft (32) facing the bottom (30) o the hollow tube (30),
- the shaft (32) comprising radial hydraulic flow stages (322, 323), the inlet channel (320) emerging in each one of these chambers, and the radial hydraulic flow stages emerging radially at the circumference of the shaft (32),
- the first (320) and second channel (325) defining a portion of a hydraulic circuit, in which the hydraulic circuit is adapted, when the inlet channel(s) (320) is (are) supplied from outside the pipe by a pressurised lubrication fluid, to cause said fluid to circulate to the radial hydraulic flow chamber stages to act as fluid bearings and to the axial chamber to act as fluid bearing stop , in such manner that the lubricating fluid circulates simultaneously between the periphery of the shaft (32) and the hollow tube (30) and between the end of the shaft (321) and the base (300) of the hollow tube (30) in the form of a film of thicknesses equal to the plays between the perforated shaft and the hollow tube, the lubrication fluid film created in this manner and the surface finish of the adjusted walls of the hollow tube and of the shaft being such that the friction generated between the latter is minimal, to such a degree that it is possible for the blades of the turbine to rotate, and therefore for their speed to be measured when a fluid flows in the pipe at speeds of less than one cm/s.

2. A device according to claim 1, in which the end play between the perforated shaft (32, 320) and the hollow tube (30) is preferably less than 50 µm, and typically of the order of 22 µm.

3. A device according to claim 1 or 2, in which the end play, called the play on the radius, between the perforated shaft (32, 320) and the hollow tube (30) is less than 50 µm, and typically of the order of 32 µm.

4. A device according to one of the previous claims, in which the surface finish of the adjusted walls of the hollow tube and of the shaft is less than 0.1 µm.

5. A device according to one of the previous claims, in which the hydraulic circuit includes:
the lubrication fluid inlet (320) is perforated internally along the length of shaft (32) and centred in it and in which the inlet channel emerges via a calibrated hydraulic resistance (324) in the hydraulic chamber, said device comprising :
• two radial hydraulic flow chamber stages (322, 323) into each of which the inlet channel (320) emerges via a calibrated hydraulic resistance (324), and emerging radially on the circumference of the shaft, where each flow stage is manufactured with an axial dimension different from the other flow stage, and includes at least three identical chambers (3220, 3221, 3222) uniformly distributed on the circumference of the shaft,
• three lubrication fluid drainage channels (325) each perforated internally in the shaft, and distributed in parallel around the lubrication fluid inlet channel (320),
• three drainage stages (3260, 3261, 3262) each emerging simultaneously over the entire periphery of the shaft and on one of the lubrication fluid drainage channels (325); where one of the drainage stages (3261) is manufactured with a dimension between the two dimensions of the flow stages (322, 323), and where another of the drainage stages (3262) is manufactured with a dimension between the dimension of the radial flow stage (322) closest to the axial flow chamber (321) and the dimension of the latter, and where the third of the stages (3260) is manufactured at the end of the shaft (32) opposite the one facing the base of the hollow tube,
in which the calibrated hydraulic resistances (324) all have the same value.

6. A device according to one of the previous claims, in which the blades (10.1, 10.2, 10.3) of the turbine (10) are attached on a hub (100) inside of which is fitted and attached the hollow tube (30) in which the perforated shaft (32) is adjusted.

7. A device according to any of the claims 1 to 5, in which the blades of the turbine are attached on a hub which constitutes the hollow tube in which the perforated shaft is adjusted.

8. A device according to one of the previous claims, in which the shaft (32) is attached to a supporting structure (2, 4), at least one portion (4) of which is perforated by a pipe (50, 52) connected to the lubrication fluid inlet channel (320) in order to convey the said fluid radially into the shaft, and at least one portion (4) of which is perforated by a pipe (51, 53) connected to the lubrication fluid drainage channel (325), to evacuate the said fluid radially after it has lubricated the bearing.

9. A device according to one of the previous claims, including a shaft axial retaining clip inserted in the groove made in the hollow tube in order to act as a stop with a shoulder of the shaft.

10. A device according to one of the previous claims, in which the hydraulic circuit is adapted to receive a flow rate of the order of 7 cc/s at a pressure of 0.5 bars.

11. Use of the measuring device according to one of the previous claims in a roughly vertical flow pipe, or flow pipe with a slight inclination relative to vertical, typically at an angle of less than 30° relative to vertical.
